(19) 

Europäisches Patentamt
European Patent Office
Office européen des brevets

(11) **EP 3 249 643 A1**

(12) **EUROPEAN PATENT APPLICATION**
published in accordance with Art. 153(4) EPC

(43) Date of publication:
**29.11.2017 Bulletin 2017/48**

(21) Application number: **16740327.8**

(22) Date of filing: **07.01.2016**

(51) Int Cl.:
*G10L 15/26* (2006.01)     *G10L 15/08* (2006.01)
*G10L 15/07* (2013.01)

(86) International application number:
**PCT/KR2016/000114**

(87) International publication number:
**WO 2016/117854 (28.07.2016 Gazette 2016/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.01.2015 CN 201510034325**
**05.01.2016 KR 20160001051**

(71) Applicant: **Samsung Electronics Co., Ltd.**
**Gyeonggi-do 16677 (KR)**

(72) Inventors:
• **ZUO, Xiang**
**Beijing 100020 (CN)**
• **ZHU, Xuan**
**Beijing 100020 (CN)**
• **SU, Tengrong**
**Beijing 100020 (CN)**

(74) Representative: **Gulde & Partner**
**Patent- und Rechtsanwaltskanzlei mbB**
**Wallstraße 58/59**
**10179 Berlin (DE)**

(54) **TEXT EDITING APPARATUS AND TEXT EDITING METHOD BASED ON SPEECH SIGNAL**

(57)    A text editing apparatus includes: a display configured to display text; a user input unit configured to receive a speech signal for editing the text; and a controller configured to analyze a meaning of a word included in the speech signal, determine an editing target and an editing type, edit the text based on the determined editing target and editing type, and display the edited text on the display.

## FIG. 2

<u>200</u>

**Description**

TECHNICAL FIELD

The present disclosure relates to a text editing apparatus and method based on a speech signal.

BACKGROUND ART

A text editing apparatus has a function for allowing a user to edit text displayed on a screen. In particular, the text editing apparatus may be used to insert letters into a certain piece of text or delete letters from the text. Also, the text editing apparatus may substitute the letters included in the text with an alternative character string or change properties of the text. With recent developments in intelligent devices, types of the text editing apparatus may vary, and may be, for example, a mobile device, wearable equipment, or an e-book reader.

As types of the text editing apparatus diversify, a method of editing text also becomes more varied. For example, due to small screens, a mobile device and wearable equipment may receive a handwriting input and a speech input from a user and thus text may be edited based on the handwriting input and the speech signal.

DETAILED DESCRIPTION OF THE INVENTION

TECHNICAL PROBLEM

The present disclosure provides a method of editing text based on a speech signal.

TECHNICAL SOLUTION

According to an embodiment, a text editing apparatus includes: a display configured to display text; a user input unit configured to receive a speech signal for editing the text; and a controller configured to analyze a meaning of a word included in the speech signal, determine an editing target and an editing type, edit the text based on the determined editing target and editing type, and display the edited text on the display.

According to an embodiment, a method of editing text includes: receiving a speech signal for editing the text; determining an editing target and an editing type by analyzing a meaning of a word comprised in the speech signal; and editing and displaying the text based on the determined editing target and editing type.

According to an embodiment, a non-transitory computer-readable recording medium has recorded thereon a program which, when executed by a computer, performs the above method.

DESCRIPTION OF THE DRAWINGS

FIG. 1 is a diagram of a text editing apparatus according to an embodiment.
FIG. 2 is a block diagram of a structure of a text editing apparatus, according to an embodiment.
FIG. 3 is a detailed block diagram of a structure of a text editing apparatus, according to an embodiment.
FIG. 4 is a diagram for explaining examples in which a text editing apparatus determines an editing type and an editing target, according to an embodiment.
FIG. 5 is a diagram for explaining examples in which a text editing apparatus obtains an alternative character string when an editing range is set and an editing type is word substitution, according to an embodiment.
FIGS. 6A and 6B are diagrams of examples in which a text editing apparatus determines a touch signal, according to an embodiment.
FIGS. 7A and 7B are diagrams of examples in which a text editing apparatus simultaneously edits editing targets in text, according to an embodiment.
FIGS. 8A and 8B are diagrams of examples in which a text editing apparatus edits text when an editing type is a property change, according to an embodiment.
FIG. 9 is a diagram of examples in which a text editing apparatus substitutes multiple editing targets with an alternative character string when an editing type is word substitution, according to an embodiment.
FIGS. 10A and 10B are diagrams of examples in which a text editing apparatus edits text when an editing type is word substitution, according to an embodiment.
FIG. 11 is a diagram of examples in which a text editing apparatus edits text according to calculated reliability, according to an embodiment.

FIG. 12 is a flowchart of a method of editing text, according to an embodiment.

BEST MODE

According to an embodiment, a text editing apparatus may include a display for displaying text; a user input unit for receiving a speech signal for editing the displayed text; and a controller for determining an editing target and an editing type through semantic analysis of words included in the speech signal, editing the text based on the determined editing target and type, and displaying the edited text on the display.

MODE OF THE INVENTION

The present disclosure will now be described more fully with reference to the accompanying drawings, in which embodiments of the present disclosure are shown. The present disclosure may, however, be embodied in many different forms and should not be construed as being limited to the embodiments set forth herein; rather, these embodiments are provided so that this disclosure will be thorough and complete, and will fully convey the concept of the present disclosure to those of ordinary skill in the art. For clarity, portions that are not relevant to the description of the present disclosure are omitted, and like reference numerals in the drawings denote like elements.

The terms used in this specification are those general terms currently widely used in the art in consideration of functions regarding the present disclosure, but the terms may vary according to the intention of those of ordinary skill in the art, precedents, or new technology in the art. Also, specified terms may be selected by the applicant, and in this case, the detailed meaning thereof will be described in the detailed description of the present disclosure. Thus, the terms used in the specification should be understood not as simple names but based on the meaning of the terms and the overall description of the disclosure.

While such terms as "first", "second", etc., may be used to describe various components, such components must not be limited to the above terms. The above terms are used only to distinguish one component from another.

The terms used in the present specification are merely used to describe particular embodiments, and are not intended to limit the present disclosure. An expression used in the singular encompasses the expression of the plural, unless it has a clearly different meaning in the context. It will be understood that when a region is referred to as being "connected to" another region, the region can be directly connected to the other region or electrically connected thereto with an intervening region therebetween. It will be further understood that the terms "comprises" and/or "comprising" used herein specify the presence of stated features or components, but do not preclude the presence or addition of one or more other features or components.

Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

Hereinafter, the present disclosure will be described in detail by explaining embodiments of the present disclosure with reference to the attached drawings.

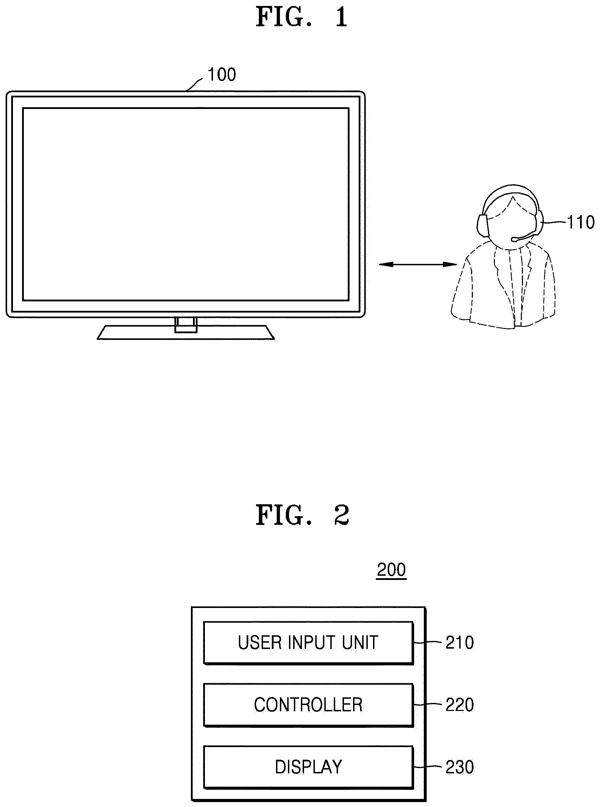

FIG. 1 is a diagram of a text editing apparatus 100 according to an embodiment.

The text editing apparatus 100 according to an embodiment is configured to display text on a screen and edit the text based on a speech signal received from a user. The text editing apparatus 100 may include a television (TV), a mobile phone, a laptop computer, a tablet computer, an on-board computer, a personal digital assistant (PDA), a navigation device, an MP3 player, a wearable device, or the like. However, the text editing apparatus 100 is not limited thereto and may be in various forms.

The text editing apparatus 100 may include a microphone 110.

The microphone 110 receives the user's voice when the user speaks. The microphone 110 may convert the received voice into an electrical signal and output the electrical signal to the text editing apparatus 100. The user's voice may include, for example, a voice corresponding to an editing target and an editing type of the text. A recognition range of the microphone 110 may differ corresponding to a volume of the user's voice and surroundings (e.g., sounds from a speaker, ambient noise, etc.).

The microphone 110 may be integrated with the text editing apparatus 100 or separated therefrom. In this case, the microphone 110 that is separated from the text editing apparatus 100 may be electrically connected to the text editing apparatus 100 through a communicator 1500, an audio/video (A/V) input unit 1600, or an output unit 1200 (not shown in FIG. 1) of the text editing apparatus 100.

FIG. 2 is a block diagram of a structure of a text editing apparatus 200, according to an embodiment.

The text editing apparatus 200 according to an embodiment may include a user input unit 210, a controller 220, and a display 230.

The user input unit 210 may receive a speech signal from the user. For example, the user input unit 210 may include the microphone 110 (refer to FIG. 1) for reception of a speech signal or a touch screen module for reception of a touch signal. However, types of signals that the user input unit 210 may receive are not limited thereto.

The controller 220 may determine an editing target and an editing type through semantic analysis of words included in the speech signal, edit the text based on the determined editing target and editing type, and display the edited text on the display 230.

Among analysis methods of processing natural language that people use, the semantic analysis may be defined as analyzing meanings of sentences based on a result of syntax analysis. Therefore, results of the semantic analysis may differ, depending on context, even when identical words are included in different sentences.

The editing type may include at least one of word deletion, word insertion, word substitution, and a property change, and the property change may include at least one of a change of punctuation marks, addition or deletion of paragraph numbers, and addition or deletion of a blank space in front of a paragraph. However, the editing type and the property change are not limited thereto. The editing target is defined as a character string of the text that the text editing apparatus 200 is supposed to edit in accordance with the editing type.

In addition, when the editing type is word substitution, the controller 220 may obtain an alternative character string in a section that is determined based on the speech signal received by the user input unit 210.

Also, when the editing type is the word substitution, the controller 220 may substitute an editing target with the alternative character string and may check whether any error has occurred in the text on which the word substitution is performed. If the text has an error according to a check result, the controller 220 may restore a part including the error to a previous state.

When the editing type is quasi-synonym substitution that is a kind of the word substitution, if there are multiple editing targets, each editing target may be substituted with at least two quasi-synonyms.

Moreover, the controller 220 may determine an editing range of the text through semantic analysis of a word included in at least one of the speech signal and the touch signal. In this case, the controller 220 may divide a character string within the editing range into at least two words and may edit words corresponding to the editing targets among the at least two words.

When at least two editing targets are in the editing range, the controller 220 may simultaneously edit the at least two editing targets.

Furthermore, the controller 220 may calculate reliability of information regarding the editing type and the editing target and may edit the text based on the calculated reliability.

According to control of the controller 220, the display 230 may display information and content processed by the text editing apparatus 200. For example, the display 230 may display the text.

When the display 230 and a touch pad form a layer structure, thus forming a touch screen, the display 230 may be used as an output device as well as an input device. The display 230 may include at least one of a liquid crystal display (LCD), a thin film transistor-liquid crystal display (TFT LCD), an organic light-emitting diode (OLED) display, a flexible display, a three-dimensional (3D) display, and an electrophoretic display. However, the display 230 is not limited thereto and may vary.

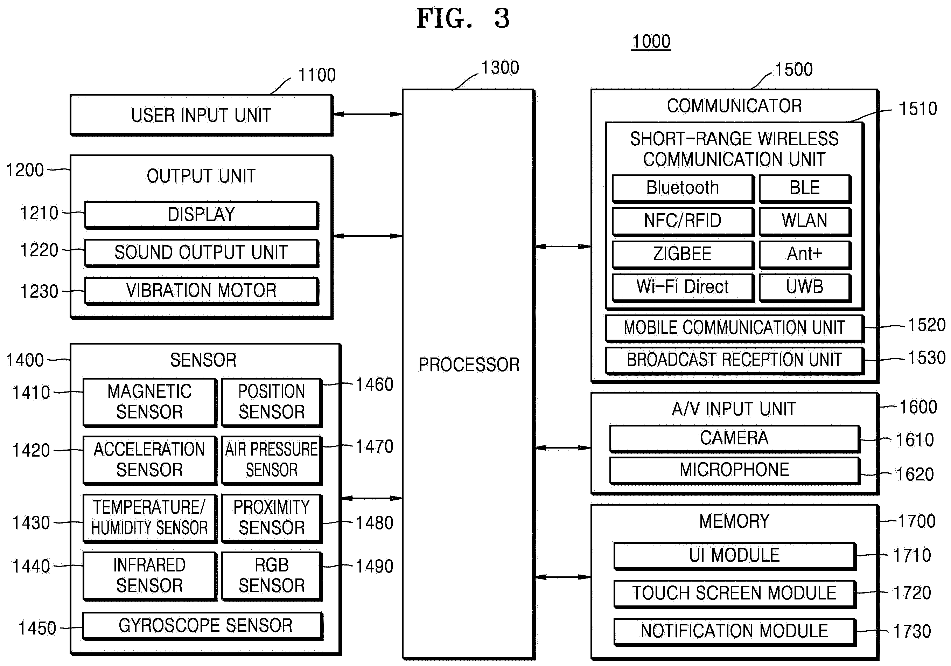

FIG. 3 is a detailed block diagram of a structure of a text editing apparatus 1111, according to an embodiment.

Referring to FIG. 3, the text editing apparatus 1111 may include a user input unit 1101, the output unit 1200, a processor 1300, the communicator 1500, a sensor 1400, the A/V input unit 1600, and a memory 1700.

The user input unit 1101 and the A/V input unit 1600 correspond to the user input unit 210 of FIG. 2, and thus detailed descriptions thereof are omitted here.

In addition, the processor 1300 and a display 1211 respectively correspond to the controller 220 and the display 230 of FIG. 2, and thus detailed descriptions thereof are omitted here.

Moreover, a microphone 1620 corresponds to the microphone 110 of FIG. 1, and thus detailed descriptions thereof are omitted here.

The output unit 1200 may output an audio signal, a video signal, or a vibration signal and may include the display 1211, a sound output unit 1221, and a vibration motor 1231.

The sound output unit 1221 may output audio data received from the communicator 1500 or stored in the memory 1700. The sound output unit 1221 may include a speaker, a buzzer, or the like.

The vibration motor 1231 may output a vibration signal. For example, the vibration motor 1231 may output a vibration signal corresponding to an output of audio data or video data (e.g., a call signal receiving sound, a message receiving sound, etc.).

The sensor 1400 may detect a state of the text editing apparatus 1111 or a state around the text editing apparatus 1111 and may transmit information regarding the detected state to the processor 1300.

The sensor 1400 may include at least one of a magnetic sensor 1410, an acceleration sensor 1420, a temperature/humidity sensor 1430, an infrared sensor 1440, a gyroscope sensor 1450, a position sensor (e.g., a Global Positioning System (GPS)) 1460, an air pressure sensor 1470, a proximity sensor 1480, and an RGB sensor (e.g., an illuminance sensor) 1490. However, the sensor 1400 is not limited thereto. Functions of respective sensors may be intuitively construed by one of ordinary skill in the art, and thus detailed descriptions thereof are omitted here.

The communicator 1500 may include a short-range wireless communication unit 1510, a mobile communication unit 1520, and a broadcast receiving unit 1530.

The short-range wireless communication unit 1510 may include a Bluetooth communication unit, a Bluetooth Low Energy (BLE) communication unit, a Near Field Communication (NFC) unit, a WLAN (Wi-Fi) communication unit, a ZigBee communication unit, an infrared Data Association (IrDA) communication unit, a Wi-Fi Direct (WFD) communication unit, an ultra wideband (UWB) communication unit, an Ant+ communication unit, or the like. However, the short-range wireless communication unit 1510 is not limited thereto.

The mobile communication unit 1520 may receive/transmit a wireless signal from/to at least one of a base station, an external terminal, and a server via a mobile communication network. Here, the wireless signal may include various types of data according to reception/transmission of a voice call signal, a video-call call signal, or a text message/multimedia message. According to an implementation type, the text editing apparatus 1111 may not include the mobile communication unit 1520.

The broadcast receiving unit 1530 may receive a broadcast signal and/or broadcast-related information from the outside via a broadcast channel. The broadcast channel may include a satellite channel and a territorial channel.

The A/V input unit 1600 receives an audio signal or a video signal and may include a camera 1610, a microphone 1620, and the like.

The memory 1700 may store programs for processing and controlling the processor 1300 and may store data that is input to the text editing apparatus 1111 or output therefrom.

The memory 1700 may include at least one storage medium from among a flash memory-type storage medium, a hard disk-type storage medium, a multimedia card micro-type storage medium, card-type memories (e.g., an SD card, an XD memory, and the like), Random Access Memory (RAM), Static Random Access Memory (SRAM), Read-Only Memory (ROM), Electrically Erasable Programmable Read-Only Memory (EEPROM), Programmable Read-Only Memory (PROM), a magnetic memory, a magnetic disc, and an optical disc.

The programs stored in the memory 1700 may be classified into modules according to functions of the programs. The programs may be classified into, for example, a user interface (UI) module 1710, a touch screen module 1720, a notification module 1730, and the like.

The UI module 1710 may provide a specialized UI or graphical user interface (GUI), which interoperates with the text editing apparatus 1111 according to applications. The touch screen module 1720 may detect a user's touch signal on the touch screen and may transmit information regarding the touch signal to the processor 1300. The touch screen module 1720 according to some embodiments may recognize and analyze touch codes. The touch screen module 1720 may be separate hardware including a controller. The notification module 1730 may generate a signal for notifying the user of the occurrence of events in the text editing apparatus 1111. Examples of the events occurring in the text editing apparatus 1111 may include call signal reception, message reception, a key signal input, a schedule notification, etc.

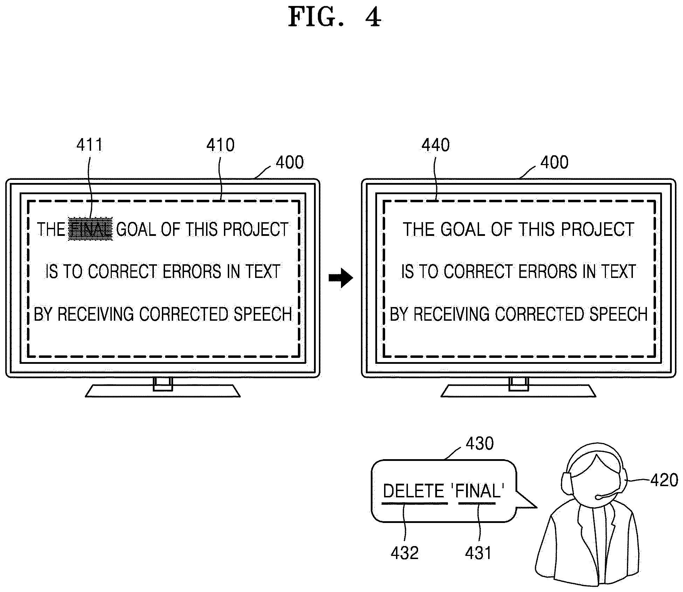

FIG. 4 is a diagram for explaining examples in which a text editing apparatus 400 determines an editing type and an editing target, according to an embodiment.

The text editing apparatus 400 may display text 410. In this case, the text 410 may be text stored in the text editing apparatus 400 or downloaded via the Internet. That is, the text 410 may be certain existing text that is not obtained based on a speech signal.

The text editing apparatus 400 may receive a speech signal 430 used to edit the text 410 from the user via a microphone 420. In this case, the text editing apparatus 400 may determine the editing target and the editing type through semantic analysis of sentences included in the speech signal 430. In particular, the text editing apparatus 400 may recognize character information including a word sequence based on a hidden Markov model or a vector space model and may perform semantic analysis on the recognized character information. However, a semantic analysis method is not limited thereto.

Referring to FIG. 4, when the speech signal 430 includes the expression "delete 'final'", the text editing apparatus 400 may determine that an editing type 431 is "word deletion" and an editing target 432 is the word "final".

The text editing apparatus 400 may determine editing targets by using a word segmentation method. In particular, text is segmented into at least two words, and when the segmented words are identical to the determined editing targets included in a speech signal, the text editing apparatus 400 may determine the segmented words as the editing targets that are supposed to be edited in the text.

In addition, the text editing apparatus 400 may calculate reliability corresponding to character information included in the speech word 430. A method of calculating the reliability will be described in more detail with reference to the following drawings.

After the semantic analysis is performed on the speech signal 430, the text editing apparatus 400 may edit the text 410 based on the editing type 432 and the editing target 431 that are determined based on the speech signal 430. Referring to FIG. 4, it is found that the word "final" 411 is deleted from an edited text 440.

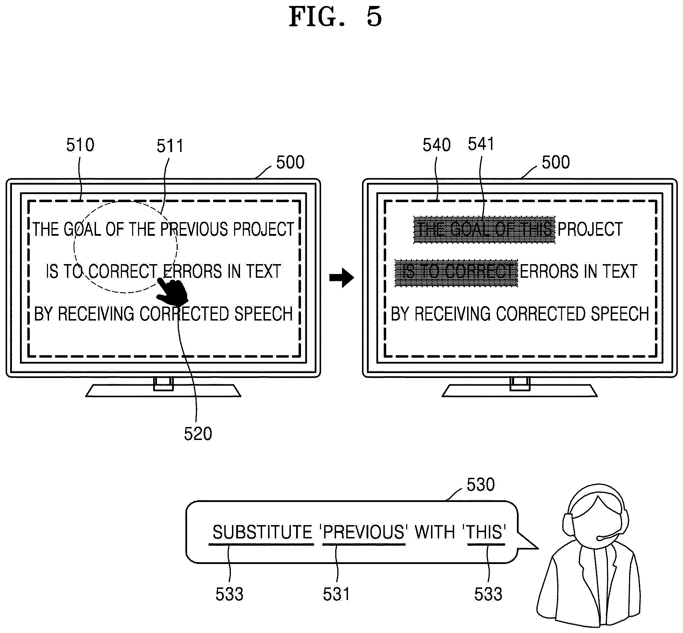

FIG. 5 is a diagram for explaining examples in which a text editing apparatus 500 obtains an alternative character string when an editing range is set and an editing type is word substitution, according to an embodiment.

The text editing apparatus 500 may determine an editing type, an editing target, and an editing range based on a signal from the user. In this case, the editing range may be defined as a section of text that is edited. Thus, the editing range may be part of the text or the entire text. Also, when no signal regarding the editing range is received, the text editing apparatus 500 may set the editing range as the entire text, but the editing range may differ according to user settings. In addition, an editing range determined based on the touch signal from the user may be identical to the editing target. For example, when the editing range determined based on the touch signal is the word "previous", the text editing apparatus 500 may substitute the word "previous" to "this" by using only a speech signal including the expression "substitute 'previous' with 'this'" and may display a substituted text 540.

The text editing apparatus 500 may determine the editing range by receiving, from the user, the touch signal or the speech signal. In this case, the touch signal may include clicking, double clicking, long pressing, linear sliding, circular sliding, etc., but is not limited thereto. In addition, the text editing apparatus 500 may determine the editing range by receiving not only the touch signal but also a gesture signal. For example, the text editing apparatus 500 may determine the editing range based on a user gesture signal of drawing a circle in front of a screen. The gesture signal may include a gesture of setting a region, a linear sliding gesture, etc., but is not limited thereto.

For example, referring to FIG. 5, the text editing apparatus 500 may receive, from the user, a circular slide input 511 on a region of the text. In this case, the text editing apparatus 500 may determine, as an editing range 541, the region of the text included in the circular slide input 511.

Moreover, the text editing apparatus 500 may obtain an alternative character string 533 from the speech signal 530. Referring to FIG. 5, since an editing type 532 included in the speech signal 530 is word substitution, the text editing apparatus 500 may obtain, from the speech signal 530, the alternative character string 533 used to substitute the editing target 531. Accordingly, in the text 540, the editing target 531 within the editing range 541 may be substituted with the alternative character string 533.

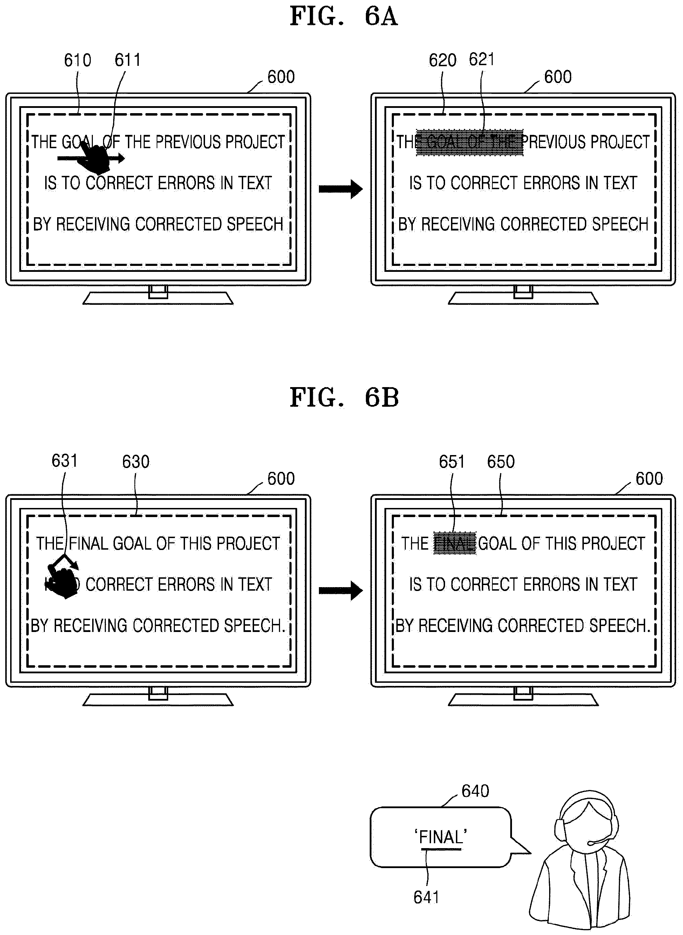

FIGS. 6A and 6B are diagrams of examples in which a text editing apparatus 600 determines a touch signal, according to an embodiment.

FIG. 6A is a diagram for explaining an example of determining an editing range 621 based on a touch signal. Referring to FIG. 6A, a slide input 611 is received from the user, and the editing range 621 is determined.

Also, the text editing apparatus 600 may determine an editing type based on the touch signal. In this case, examples of a touch signal determined as an editing type may include a deletion symbol, an insertion symbol, a position adjusting symbol, or the like. However, the touch signal is not limited thereto.

FIG. 6B is a diagram for explaining an example of determining an editing type based on the touch signal.

Referring to FIG. 6B, the text editing apparatus 600 may receive an insertion symbol 631 that is preset by the user, and when a word to be inserted is received through a speech signal, the text editing apparatus 600 may insert an editing target 651 to a location of the insertion symbol 631.

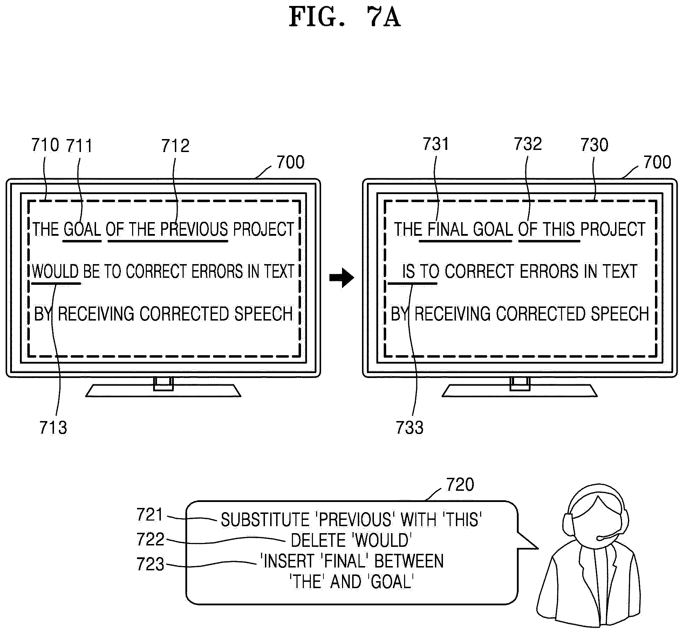

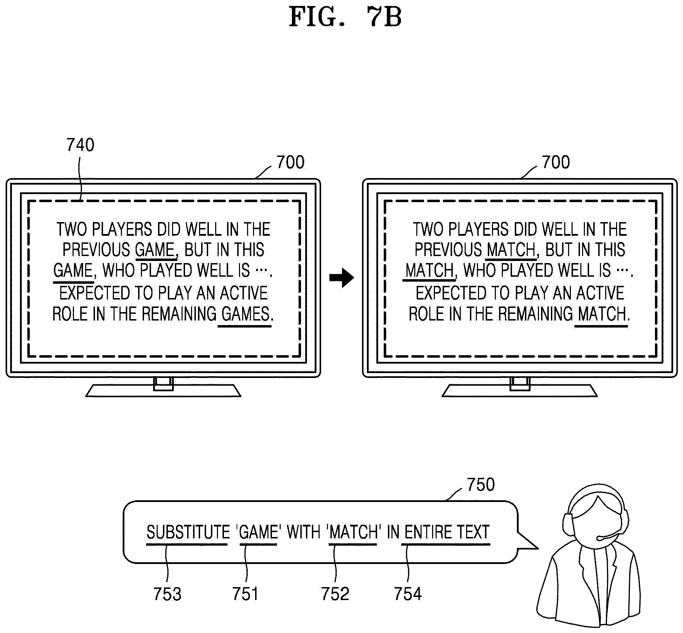

FIGS. 7A and 7B are diagrams of examples in which a text editing apparatus 700 simultaneously edits editing targets in text, according to an embodiment.

When a speech signal 720 includes two or more editing types and targets 721, 722, and 723, the text editing apparatus 700 may simultaneously edit the editing targets 721, 722, and 723 in text 710.

Referring to FIG. 7A, the editing types included in the speech signal 720 received from the user are word substitution, word deletion, and word insertion. In this case, the text editing apparatus 700 may simultaneously edit the text 710 based on a determined editing type and an editing target corresponding thereto.

Also, when there are two or more editing targets 721 to 723 of the same editing type within an editing range, the text editing apparatus 700 may simultaneously edit the editing targets 721 to 723.

Referring to FIG. 7B, an editing range 754 included in a speech signal 750 is the entire text 740. In this case, since there are multiple editing targets 751 in the entire text 740, the text editing apparatus 700 may simultaneously edit the editing targets 751. In particular, since an editing target 753 is word substitution, the text editing apparatus 700 may determine an alternative character string 752 based on the speech signal 750 and may perform editing on the text 740.

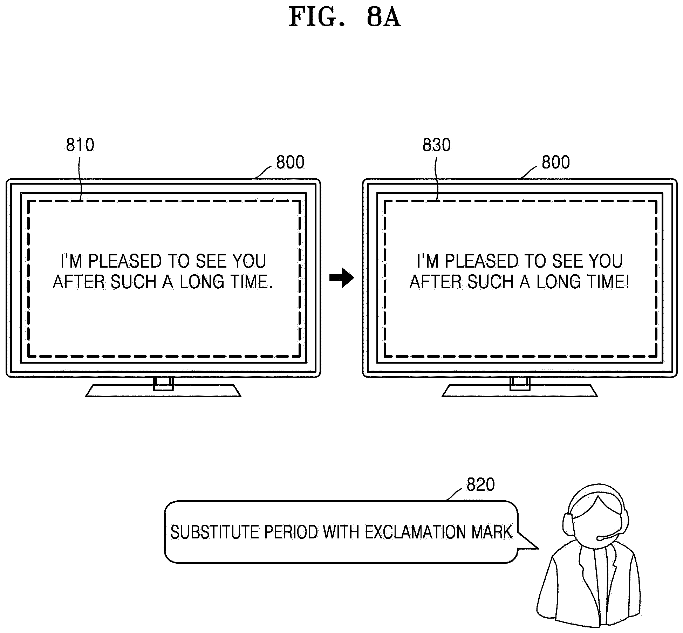

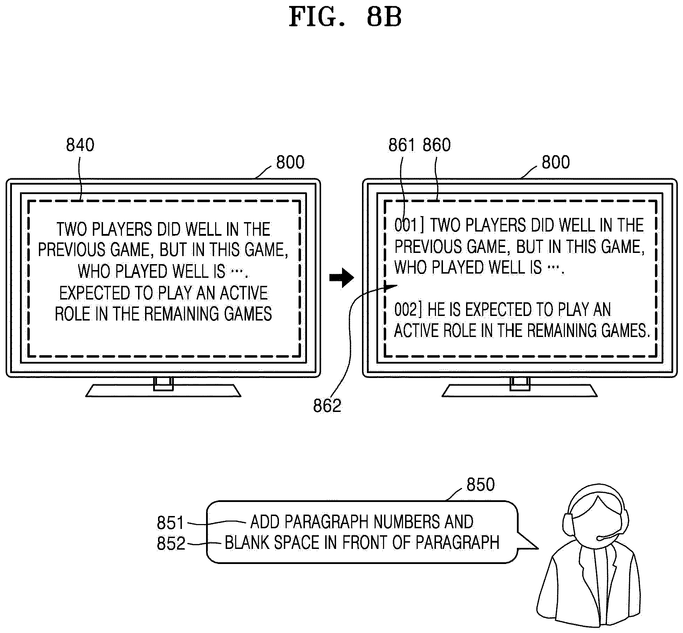

FIGS. 8A and 8B are diagrams of examples in which a text editing apparatus 800 edits text when an editing type is a property change, according to an embodiment.

The text editing apparatus 800 may change properties of the text. The property change may indicate that general properties of the text are changed. In particular, the property change may include addition/deletion of paragraph numbers, addition/deletion of a blank space in front of a paragraph, a change of a punctuation mark, etc., but is not limited thereto.

FIG. 8A is a diagram for explaining an example in which the text editing apparatus 800 edits text 810 when an editing type is a change of a punctuation mark among the property changes. Referring to FIG. 8A, based on a speech signal 820, the text editing apparatus 800 may determine a period and an exclamation mark as punctuation marks through semantic analysis and may determine that the editing type is a change of a punctuation mark among the property changes. Accordingly, the text editing apparatus 800 may change a period to an exclamation mark in text 830.

FIG. 8B is a diagram for explaining an example in which the text editing apparatus 800 edits text 840 when editing types are addition of paragraph numbers and insertion of a blank space in front of a paragraph. Referring to FIG. 8B, the text editing apparatus 800 may receive a speech signal 850 and may determine that, through semantic analysis, the editing types are "addition of paragraph numbers" and "insertion of a blank space in front of a paragraph" among the property changes. Accordingly, the text editing apparatus 800 may add a paragraph number 861 and insert a blank space 862 in front of a paragraph in text 860.

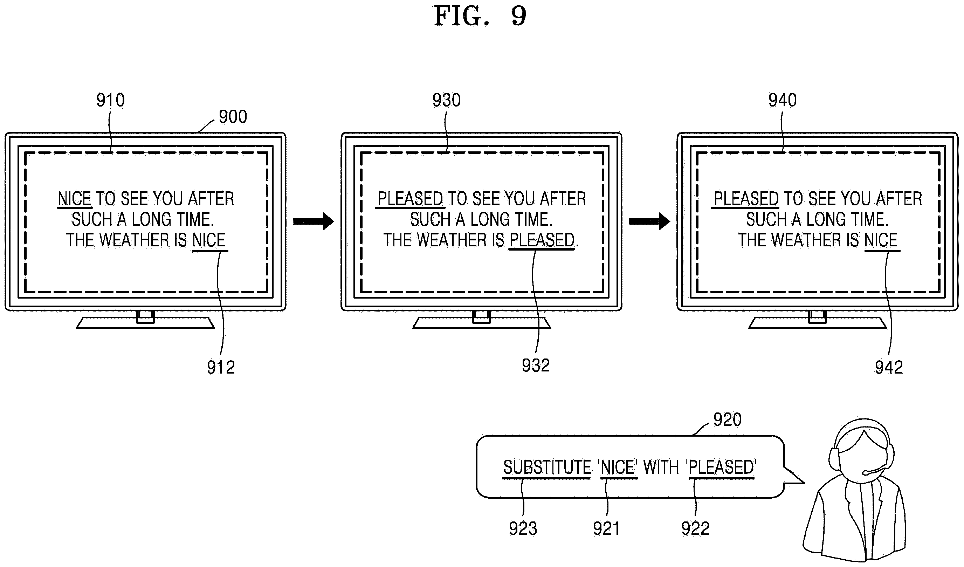

FIG. 9 is a diagram of examples in which a text editing apparatus 900 substitutes multiple editing targets with an alternative character string 922 when an editing type is word substitution, according to an embodiment.

Referring to FIG. 9, the text editing apparatus 900 may receive a speech signal 920, recognize respective words included in the speech signal 920, and perform semantic analysis of each word. According to a result of the semantic analysis, when it is determined that an editing type 923 is word substitution, and when editing targets 921 and an alternative character string 922 are respectively determined as "nice" and "pleased", the editing targets 921 included in text 910 may be substituted with the alternatively character string 922 according to the speech signal 920. However, when the editing targets 921 have different meanings in multiple contexts in the text 910, a sentence may be grammatically wrong due to the word substitution as in a middle text 930. Thus, after all of the editing targets 921 are substituted with the alterative character string 922, the text editing apparatus 900 may check whether the text 930 has any error. In this case, the text editing apparatus 900 may check whether the text 930 has any error through semantic analysis.

When the text 930 has an error, the text editing apparatus 900 may restore a part including the error to a previous state. Referring to FIG. 9, when a second editing target 912 is substituted with the alternative character string 922 in the text 910, a contextual error occurs. Therefore, according to a result of the semantic analysis, the text editing apparatus 900 may restore a second editing target 932 included in the middle text 930 to the previous state 942.

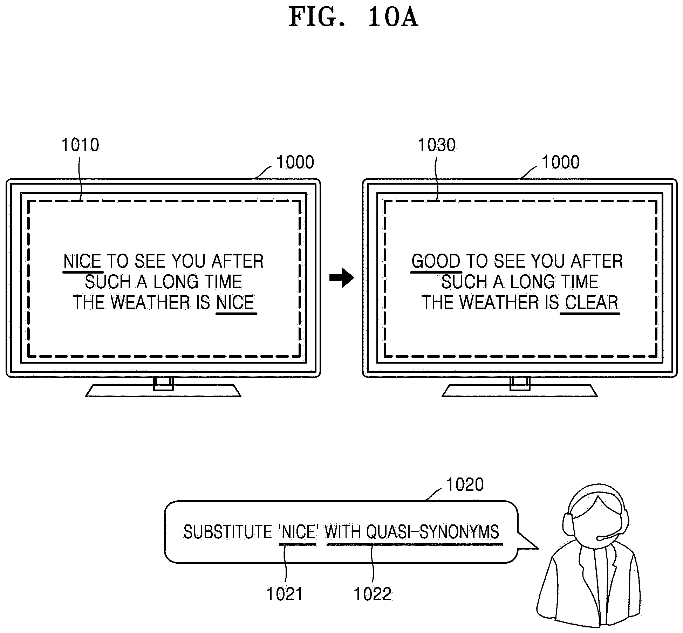

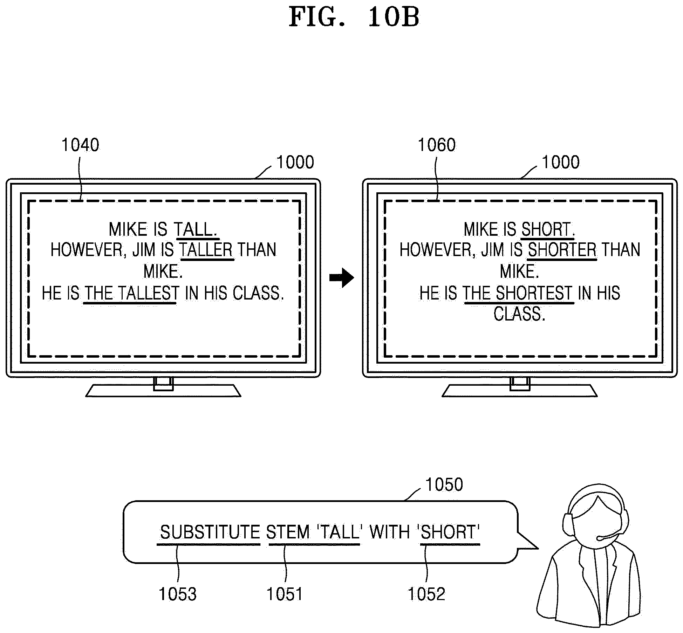

FIGS. 10A and 10B are diagrams of examples in which a text editing apparatus 1000 edits text when an editing type is word substitution, according to an embodiment.

The text editing apparatus 1000 may substitute words included in text and particularly, perform quasi-synonym substitution, antonym substitution, word stem substitution, or the like. The quasi-synonym substitution indicates that a word is substituted with other words having the same meaning as the word in the text. For example, when the word "game" included in the text is substituted with a quasi-synonym thereof, the text editing apparatus 1000 may substitute an editing target, i.e., the word "game", with various quasi-synonyms such as "match", "competition", "content", or "tournament". In this case, information regarding the quasi-synonym may be stored in the text editing apparatus 1000 in advance or may be downloaded from a server. Referring to FIG. 10A, when the text editing apparatus 1000 substitutes the word "nice" included in text 1010 with a quasi-synonym, the text editing apparatus 1000 may perform semantic analysis to substitute the word "nice" respectively with quasi-synonyms "good" and "clear" that fit the context.

The antonym substitution indicates that, in text, a certain word is substituted with a word having an opposite meaning to the certain word. For example, the word "easy" in the text may be substituted with the word "difficult" that is an antonym of "easy".

In addition, when an editing target is a word including an antonymous affix, the text editing apparatus 1000 may substitute the word by using the antonymous affix. In this case, the antonymous affix may be an antonymous prefix such as "dis-" or "un-" or an antonymous suffix "-less". For example, when it is determined that the editing target is 'disable', an antonym "able", from which the antonymous affix "dis" is removed, is determined as an alternative character string. Then, the text editing apparatus 1000 may substitute the editing target "disable" with the alternative character string "able".

The word stem substitution indicates that multiple inflected words are simultaneously substituted when a stem, which does not change when the inflected words are inflected, is an editing target. For example, when word substitution is performed on English text, although an editing target is in a singular form, the text editing apparatus 1000 may substitute a plural form of the editing target at the same time. In addition, a comparative form and a superlative form of an English adjective may be simultaneously substituted through word stem substitution. For example, when the user performs the word stem substitution for the word "big" included in the text, the word "big" and comparative and superlative forms, e.g., "bigger", "biggest", etc. may all be substituted in the text. Referring to FIG. 10B, according to a speech signal 1050 via which the word 'tall' 1051 is substituted with the word 'short' 1052, comparative and superlative forms of the word 'tall '1051 included in text 1040, may be substituted with comparative and superlative forms of the word 'short' 1052 that is an alternative character string.

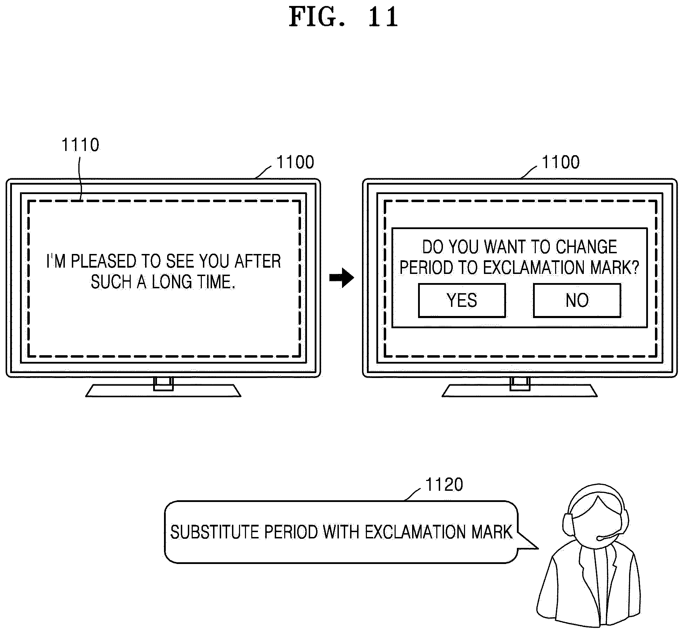

FIG. 11 is a diagram of examples in which a text editing apparatus 1100 edits text according to calculated reliability, according to an embodiment.

The text editing apparatus 1100 may calculate reliability regarding an editing type and an editing target, which are determined based on a speech signal 1120 and a touch signal, and may edit text 1110 according to a calculation result. For example, when the calculated reliability is lower than or equal to a preset threshold value, the text editing apparatus 1100 may receive, from the user, a control signal regarding whether to edit the text 1110 before the text 1110 is actually edited. In this case, when confirmation information is received from the user, the text editing apparatus 1100 may edit the text 1110, and when cancellation information is received, the text editing apparatus 1100 may not edit the text 1110.

When the calculated reliability is greater than the preset threshold value, the text editing apparatus 1100 may edit the text 1110 without receiving a control signal from the user. In this case, since the threshold value may be set by the user, text editing accuracy may be secured according to the threshold value.

The text editing apparatus 1100 may calculate the reliability regarding the editing type and editing target, which are determined based on the speech signal 1120, based on logistic regression analysis. Logistic regression analysis is a representative statistical algorithm used, when analysis targets are classified into at least two categories, to analyze where respective observed values may belong.

When there are multiple editing targets in an editing range, the text editing apparatus 1100 may calculate a conditional probability of an editing type corresponding to each editing target. In this case, conditions regarding the conditional probability include a word sequence and a touch sequence that are recognized based on the speech signal 1120 and the touch signal.

Among K editing types, $E_j$ that is a $j^{th}$ editing type may have conditional probability $P(E_j|W, G)$ that may be calculated via Equation 1 below.

## [Equation 1]

$$P(E_j|W,G) = \frac{e^{\theta_j^T x^i}}{\sum_{k=1}^{2k} e^{\theta_k^T x^i}}$$

where, j is an integer from 1 to K, and W is the word sequence recognized based on the speech signal. Also, G is the touch sequence recognized based on the touch signal, e is the base of a natural logarithm, and $\theta_j$ is a parameter of a softmax model that may be calculated according to a conventional Expectation-Maximization (EM) algorithm. The EM algorithm is an iterative algorithm used to estimate a probability model that is not observed and depends on latent variables. When $x^i$ is a character value, $x^i$ may be $P(E_1|W)$, $P(E_2|W)$, ... , $P(E_k|W)$, $P(E_1|G)$, $P(E_2|G)$, ... , and $P(E_k|G)$. In this case, i is an integer from 1-2K, $P(E_j|W)$ indicates conditional probability of $E_j$ that is an editing type in the word sequence W, and $P(E_j|G)$ indicates conditional probability of $E_j$ that is an editing type in the touch sequence G.

The text editing apparatus 1100 may calculate the conditional probability corresponding to the word sequence or touch sequence and may compare the calculated probability with a threshold value, thereby determining an editing target and an editing type.

In addition, under certain conditions, conditional probability of an editing target within an editing range may be specifically calculated as follows.

First of all, for each word within the editing range, conditional probability of editing target candidates may be calculated under the certain conditions, according to conditional probability of editing target candidates under a first condition and a second condition. In this case, the first condition includes the word sequence recognized based on the speech signal, and the second condition includes the touch sequence recognized based on the touch signal.

In this case, under certain conditions, as an editing target candidate within the editing range, conditional probability $P(Error|C_n;W, G)$ of an $n^{th}$ word, i.e., $C_n$, may be calculated via Equation 2.

## [Equation 2]

$$P(Error|C_n;W,G) = e^{-(\alpha_0 + \alpha_1 P(Error|C_n;W) - \alpha_2 P(Error|C_n;G))}$$

In Equation 2, e is the base of a log index, and $\alpha_0$, $\alpha_1$, and $\alpha_2$ are model parameters obtained using the EM algorithm. Also, $P(Error|C_n;W)$ indicates the conditional probability of the word $C_n$ among editing target candidates when the word sequence determined based on the speech signal is W, and $P(Error|C_n;G)$ indicates the conditional probability of the word $C_n$ among the editing target candidates when the touch sequence recognized based on the touch signal is G.

In addition, when the word sequence recognized based on the speech signal and the touch sequence recognized based on the touch signal are respectively W and G, $P(Error|C_n;W, G)$ indicates the conditional probability of the word $C_n$ among the editing target candidates.

The $P(Error|C_n;W)$ may be calculated based on reliability of the word Cn.

$P(Error|C_n;G)$ may be calculated according to a Gaussian hybrid model, and in this case, input variables of the Gaussian hybrid model may be related to a region of the word $C_n$ within the editing range determined based on the touch signal.

For an operation $O_{opt}$ for editing text determined based on the touch signal, conditional probability of the operation $O_{opt}$ may be calculated via Equation 3.

## [Equation 3]

$$P(O_{opt}|W,G)=e^{-(\beta_0+\beta_1 P(Error|C_m;W,G)+\beta_2 P(E|W,G)+\beta_3 P(C_{all}|W,G))}$$

In Equation 3, $\beta_0$, $\beta_1$, $\beta_2$, and $\beta_3$ are model parameters, $P(C_m|W, G)$ indicates conditional probability of a word included in the text and corresponding to an editing target $C_m$, $P(Error|C_m;W, G)$ indicates conditional probability of the editing target $C_m$ corresponding to the operation $O_{opt}$, and $P(E|W, G)$ indicates conditional probability of an editing type T corresponding to the editing target $C_m$.

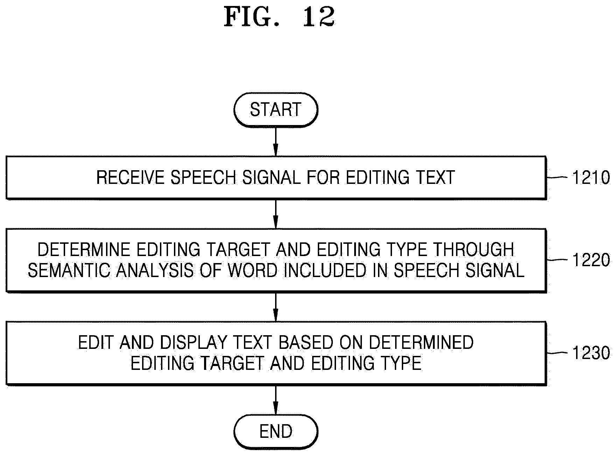

FIG. 12 is a flowchart of a method of editing text, according to an embodiment.

In operation 1210, the text editing apparatus may receive a speech signal for editing text.

In operation 1220, the text editing apparatus may analyze a meaning of a word included in the speech signal and determine an editing target and an editing type. Also, the text editing apparatus may receive a touch signal, analyze a meaning of a word included in at least one of the speech signal and the touch signal, and thus determine an editing range of the text. In this case, the editing type may include at least one of word deletion, word insertion, word substitution, and property change. In this case, the word substitution may include at least one of quasi-synonym substitution, antonym substitution, and word stem substitution, and the property change may include at least one of a change of punctuation marks, addition or deletion of paragraph numbers, and addition or deletion of a blank space in front of a paragraph. However, the word substitution and property change are not limited thereto.

When the editing type is the word substitution, the text editing apparatus may obtain an alternative character string. Also, when the editing type is the word substitution, the text editing apparatus may substitute the editing target with the alternative character string and may check whether there is any error in a substituted text. If there is any error in the substituted text according to a check result, the text editing apparatus may restore a part including the error to an original state.

In operation 1230, the text editing apparatus may edit and display the text based on the determined editing target and editing type. In addition, when there are at least two editing targets within the editing range, the text editing apparatus may simultaneously edit and display the at least two editing targets. When the editing type is the quasi-synonym substitution and there are multiple editing targets, the text editing apparatus may respectively substitute the editing targets with at least two quasi-synonyms and may display the at least two quasi-synonyms.

The text editing apparatus may calculate reliability of information regarding the editing type and the editing target and may edit and display the text based on the calculated reliability.

The above embodiments may be implemented as recording media including instructions, e.g., program modules, which is executable by a computer. A non-transitory computer-readable recording medium may be an arbitrary recording medium that may be accessed by a computer and may include a volatile or non-volatile medium and a removable or non-removable medium. In addition, the non-transitory computer-readable recording medium may include a computer storage medium and a communication medium. The non-transitory computer-readable recording medium may include a volatile medium, a non-volatile medium, a removable medium, and a non-removable medium that are implemented by an arbitrary method or technology for storing information such as computer-readable instructions, data structures, program modules, and data. The communication medium includes computer-readable instructions, data structures, program modules, another data of modulated data signals, other transmission mechanisms, and an arbitrary information transmission medium.

While the present invention has been particularly shown and described with reference to exemplary embodiments thereof, it will be understood by those of ordinary skill in the art that various changes in form and details may be made therein without departing from the spirit and scope of the present invention as defined by the following claims.

**Claims**

**1.** A text editing apparatus comprising:

a display configured to display text;
a user input unit configured to receive a speech signal for editing the text; and
a controller configured to analyze a meaning of a word included in the speech signal, determine an editing target and an editing type, edit the text based on the determined editing target and editing type, and display the edited text on the display.

2. The text editing apparatus of claim 1, wherein the user input unit is further configured to receive a touch signal, and the controller is further configured to analyze a meaning of a word included in at least one of the speech signal and the touch signal and determine an editing range of the text.

3. The text editing apparatus of claim 2, wherein the controller is further configured to divide a character string within the editing range into at least two words and edit a word corresponding to the editing target among the at least two words.

4. The text editing apparatus of claim 2, wherein, when there are at least two editing targets within the editing range, the controller is further configured to simultaneously edit the at least two editing targets.

5. The text editing apparatus of claim 1, wherein the editing target comprises at least one of word deletion, word insertion, word substitution, and property change, and
the property change comprises at least one of a change of punctuation marks, addition or deletion of paragraph numbers, and addition or deletion of a blank space in front of a paragraph.

6. The text editing apparatus of claim 5, wherein, when the editing type is the word substitution, the controller is further configured to obtain an alternative character string for substituting the editing target included in the speech signal received by the user input unit.

7. The text editing apparatus of claim 6, wherein the word substitution comprises quasi-synonym substitution, and when the editing type is the quasi-synonym substitution and there are a plurality of editing targets, the controller is further configured to substitute each of the plurality of editing targets with at least two quasi-synonyms.

8. The text editing apparatus of claim 5, wherein, when the editing type is the word substitution, the controller is further configured to substitute the editing target with an alternative character string and check whether there is any error in the substituted editing targets.

9. The text editing apparatus of claim 8, wherein, when there is an error in the substituted editing targets according to a check result, the controller is further configured to restore a part including the error to an original state.

10. The text editing apparatus of claim 1, wherein the controller is further configured to calculate reliability of information about the editing type and the editing target and edit the text based on the calculated reliability.

11. A method of editing text, the method comprising:

   receiving a speech signal for editing the text;
   determining an editing target and an editing type by analyzing a meaning of a word comprised in the speech signal; and
   editing and displaying the text based on the determined editing target and editing type.

12. The method of claim 11, further comprising receiving a touch signal,
wherein the determining of the editing target and the editing type comprises determining an editing range of the text by analyzing a meaning of a word comprised in at least one of the speech signal and the touch signal.

13. The method of claim 12, wherein, when there are at least two editing targets within the editing range, the editing and displaying of the text comprises simultaneously displaying the at least two editing targets.

14. The method of claim 11, wherein the editing type comprises at least one of word deletion, word insertion, word substitution, and property change, and
the property change comprises at least one of a change of punctuation marks, addition or deletion of paragraph numbers, and addition or deletion of a blank space in front of a paragraph.

15. The method of claim 14, wherein the determining of the editing target and the editing type further comprises, when the editing type is the word substitution, obtaining an alternative character string used to substitute the editing target comprised in the received speech signal.

**16.** The method of claim 14, wherein the word substitution comprises quasi-synonym substitution, and when the editing type is the quasi-synonym substitution and there are a plurality of editing targets, the editing and displaying of the text comprises substituting each of the plurality of editing targets with at least two quasi-synonyms.

**17.** The method of claim 14, wherein the editing and displaying of the text comprises:

when the editing type is the word substitution, substituting the editing target with an alternative character string; and
checking whether there is any error in the substituted editing targets.

**18.** The method of claim 17, further comprising, when there is an error in the substituted editing targets according to a check result, restoring a part including the error to an original state.

**19.** The method of claim 11, wherein the displaying of the text comprises calculating reliability of information about the editing type and the editing target and editing and displaying the text based on the calculated reliability.

**20.** A non-transitory computer-readable recording medium having recorded thereon a program which, when executed by a computer, performs the method of claim 11.

# FIG. 1

100

110

# FIG. 2

200

| USER INPUT UNIT | 210 |
| CONTROLLER | 220 |
| DISPLAY | 230 |

# FIG. 3

1000

**1100** USER INPUT UNIT

**1300** PROCESSOR

**1200** OUTPUT UNIT
- **1210** DISPLAY
- **1220** SOUND OUTPUT UNIT
- **1230** VIBRATION MOTOR

**1400** SENSOR
- **1410** MAGNETIC SENSOR
- **1420** ACCELERATION SENSOR
- **1430** TEMPERATURE/ HUMIDITY SENSOR
- **1440** INFRARED SENSOR
- **1450** GYROSCOPE SENSOR
- **1460** POSITION SENSOR
- **1470** AIR PRESSURE SENSOR
- **1480** PROXIMITY SENSOR
- **1490** RGB SENSOR

**1500** COMMUNICATOR
- **1510** SHORT-RANGE WIRELESS COMMUNICATION UNIT
  - Bluetooth
  - BLE
  - NFC/RFID
  - WLAN
  - ZIGBEE
  - Ant+
  - Wi-Fi Direct
  - UWB
- **1520** MOBILE COMMUNICATION UNIT
- **1530** BROADCAST RECEPTION UNIT

**1600** A/V INPUT UNIT
- **1610** CAMERA
- **1620** MICROPHONE

**1700** MEMORY
- **1710** UI MODULE
- **1720** TOUCH SCREEN MODULE
- **1730** NOTIFICATION MODULE

EP 3 249 643 A1

# FIG. 4

# FIG. 5

510    511    500

THE GOAL OF THE PREVIOUS PROJECT

IS TO CORRECT ERRORS IN TEXT

BY RECEIVING CORRECTED SPEECH

520

540  541    500

THE GOAL OF THIS PROJECT

IS TO CORRECT ERRORS IN TEXT

BY RECEIVING CORRECTED SPEECH

530

SUBSTITUTE 'PREVIOUS' WITH 'THIS'

533         531         533

# FIG. 6A

THE GOAL OF THE PREVIOUS PROJECT

IS TO CORRECT ERRORS IN TEXT

BY RECEIVING CORRECTED SPEECH

THE GOAL OF THE PREVIOUS PROJECT

IS TO CORRECT ERRORS IN TEXT

BY RECEIVING CORRECTED SPEECH

# FIG. 6B

THE FINAL GOAL OF THIS PROJECT

CORRECT ERRORS IN TEXT

BY RECEIVING CORRECTED SPEECH.

THE FINAL GOAL OF THIS PROJECT

IS TO CORRECT ERRORS IN TEXT

BY RECEIVING CORRECTED SPEECH.

'FINAL'

# FIG. 7A

710 711 712 700

THE GOAL OF THE PREVIOUS PROJECT
WOULD BE TO CORRECT ERRORS IN TEXT
BY RECEIVING CORRECTED SPEECH

713

731 732 730 700

THE FINAL GOAL OF THIS PROJECT
IS TO CORRECT ERRORS IN TEXT
BY RECEIVING CORRECTED SPEECH

733

720
721 SUBSTITUTE 'PREVIOUS' WITH 'THIS'
722 DELETE 'WOULD'
723 'INSERT 'FINAL' BETWEEN 'THE' AND 'GOAL'

# FIG. 7B

740

700

TWO PLAYERS DID WELL IN THE PREVIOUS GAME, BUT IN THIS GAME, WHO PLAYED WELL IS ⋯. EXPECTED TO PLAY AN ACTIVE ROLE IN THE REMAINING GAMES.

700

TWO PLAYERS DID WELL IN THE PREVIOUS MATCH, BUT IN THIS MATCH, WHO PLAYED WELL IS ⋯. EXPECTED TO PLAY AN ACTIVE ROLE IN THE REMAINING MATCH.

750

SUBSTITUTE 'GAME' WITH 'MATCH' IN ENTIRE TEXT

753    751    752    754

# FIG. 8A

810     800         830     800

I'M PLEASED TO SEE YOU AFTER SUCH A LONG TIME.

→

I'M PLEASED TO SEE YOU AFTER SUCH A LONG TIME!

820

SUBSTITUTE PERIOD WITH EXCLAMATION MARK

# FIG. 8B

840

800

TWO PLAYERS DID WELL IN THE
PREVIOUS GAME, BUT IN THIS GAME,
WHO PLAYED WELL IS ⋯.
EXPECTED TO PLAY AN ACTIVE
ROLE IN THE REMAINING GAMES

861 860

800

001] TWO PLAYERS DID WELL IN THE
PREVIOUS GAME, BUT IN THIS GAME,
WHO PLAYED WELL IS ⋯.

002] HE IS EXPECTED TO PLAY AN
ACTIVE ROLE IN THE REMAINING GAMES.

862

850

851 — ADD PARAGRAPH NUMBERS AND
852 — BLANK SPACE IN FRONT OF PARAGRAPH

FIG. 9

# FIG. 10A

1010
1000

NICE TO SEE YOU AFTER
SUCH A LONG TIME
THE WEATHER IS NICE

→

1030
1000

GOOD TO SEE YOU AFTER
SUCH A LONG TIME
THE WEATHER IS CLEAR

1020

SUBSTITUTE 'NICE' WITH QUASI-SYNONYMS

1021       1022

# FIG. 10B

1040
1000

MIKE IS <u>TALL</u>.
HOWEVER, JIM IS <u>TALLER</u> THAN
MIKE.
HE IS <u>THE TALLEST</u> IN HIS CLASS.

→

1060
1000

MIKE IS <u>SHORT</u>.
HOWEVER, JIM IS <u>SHORTER</u> THAN
MIKE.
HE IS <u>THE SHORTEST</u> IN HIS
CLASS.

1050

<u>SUBSTITUTE</u> <u>STEM 'TALL'</u> <u>WITH 'SHORT'</u>

1053     1051             1052

# FIG. 11

1110

1100

I'M PLEASED TO SEE YOU AFTER
SUCH A LONG TIME.

1100

DO YOU WANT TO CHANGE
PERIOD TO EXCLAMATION MARK?

| YES | NO |

1120

SUBSTITUTE PERIOD WITH EXCLAMATION MARK

# FIG. 12

```
                    ┌─────────┐
                    │  START  │
                    └────┬────┘
                         │
                         ▼
┌─────────────────────────────────────────────────┐
│        RECEIVE SPEECH SIGNAL FOR EDITING TEXT     │──── 1210
└─────────────────────────┬───────────────────────┘
                          │
                          ▼
┌─────────────────────────────────────────────────┐
│  DETERMINE EDITING TARGET AND EDITING TYPE THROUGH│
│ SEMANTIC ANALYSIS OF WORD INCLUDED IN SPEECH SIGNAL│──── 1220
└─────────────────────────┬───────────────────────┘
                          │
                          ▼
┌─────────────────────────────────────────────────┐
│    EDIT AND DISPLAY TEXT BASED ON DETERMINED      │
│         EDITING TARGET AND EDITING TYPE            │──── 1230
└─────────────────────────┬───────────────────────┘
                          │
                          ▼
                    ┌─────────┐
                    │   END   │
                    └─────────┘
```

<table>
<tr><td colspan="2">**INTERNATIONAL SEARCH REPORT**</td><td>International application No.<br>**PCT/KR2016/000114**</td></tr>
</table>

**A.    CLASSIFICATION OF SUBJECT MATTER**

*G10L 15/26(2006.01)i, G10L 15/08(2006.01)i, G10L 15/07(2013.01)i*

According to International Patent Classification (IPC) or to both national classification and IPC

**B.    FIELDS SEARCHED**

Minimum documentation searched (classification system followed by classification symbols)
G10L 15/26; G06F 3/048; G06F 3/14; G06F 17/24; G10L 15/00; G10L 13/08; G01L 11/00; G06F 3/01; G10L 15/08; G10L 15/07

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: text, editing, voice sound, semantic analysis, editing object selection, editing kinds.

**C.    DOCUMENTS CONSIDERED TO BE RELEVANT**

| Category* | Citation of document, with indication, where appropriate, of the relevant passages | Relevant to claim No. |
|---|---|---|
| Y | US 2013-0311179 A1 (APPLE INC.) 21 November 2013<br>See paragraphs [0002], [0007], [0022], [0028]-[0029] and [0031]-[0033];<br>claim 8; and figures 2-3. | 1-20 |
| Y | KR 10-1418163 B1 (APPLE INC.) 09 July 2014<br>See paragraphs [0044]-[0046], [0074]-[0075] and [0078]; claims 1 and 7; and<br>figures 3 and 5a. | 1-20 |
| Y | KR 10-2014-0094744 A (ELECTRONICS AND TELECOMMUNICATIONS RESEARCH<br>INSTITUTE) 31 July 2014<br>See paragraphs [0056]-[0060]; claims 1-3, 5, 7, 9, 11, 13 and 15-16; and figure 2. | 1-20 |
| A | US 6,604,078 B1 (SHIMAZAKI, Izumi) 05 August 2003<br>See column 5, lines 36-47; column 7, lines 34-57; and figures 1 and 5. | 1-20 |
| A | JP 10-011248 A (HITACHI LTD.) 16 January 1998<br>See paragraphs [0017]-[0020] and figures 2-4. | 1-20 |

☐ Further documents are listed in the continuation of Box C.　　☒ See patent family annex.

| | |
|---|---|
| *      Special categories of cited documents:<br>"A"   document defining the general state of the art which is not considered<br>　　　to be of particular relevance<br>"E"   earlier application or patent but published on or after the international<br>　　　filing date<br>"L"   document which may throw doubts on priority claim(s) or which is<br>　　　cited to establish the publication date of another citation or other<br>　　　special reason (as specified)<br>"O"   document referring to an oral disclosure, use, exhibition or other<br>　　　means<br>"P"   document published prior to the international filing date but later than<br>　　　the priority date claimed | "T"   later document published after the international filing date or priority<br>　　　date and not in conflict with the application but cited to understand<br>　　　the principle or theory underlying the invention<br>"X"   document of particular relevance; the claimed invention cannot be<br>　　　considered novel or cannot be considered to involve an inventive<br>　　　step when the document is taken alone<br>"Y"   document of particular relevance; the claimed invention cannot be<br>　　　considered to involve an inventive step when the document is<br>　　　combined with one or more other such documents, such combination<br>　　　being obvious to a person skilled in the art<br>"&"   document member of the same patent family |

| Date of the actual completion of the international search | Date of mailing of the international search report |
|---|---|
| 31 MARCH 2016 (31.03.2016) | **31 MARCH 2016 (31.03.2016)** |

| Name and mailing address of the ISA/KR<br>　　Korean Intellectual Property Office<br>　　Government Complex-Daejeon, 189 Seonsa-ro, Daejeon 302-701,<br>　　Republic of Korea<br>Facsimile No. 82-42-472-7140 | Authorized officer<br><br><br>Telephone No. |
|---|---|

Form PCT/ISA/210 (second sheet) (January 2015)

INTERNATIONAL SEARCH REPORT
Information on patent family members

International application No.

**PCT/KR2016/000114**

| Patent document cited in search report | Publication date | Patent family member | Publication date |
|---|---|---|---|
| US 2013-0311179 A1 | 21/11/2013 | US 2012-0078627 A1 | 29/03/2012 |
| | | US 8719014 B2 | 06/05/2014 |
| | | US 9075783 B2 | 07/07/2015 |
| KR 10-1418163 B1 | 09/07/2014 | AU 2012-227294 B2 | 07/05/2015 |
| | | CN 103035240 A | 10/04/2013 |
| | | CN 103035240 B | 25/11/2015 |
| | | EP 2587478 A2 | 01/05/2013 |
| | | EP 2587478 A3 | 28/05/2014 |
| | | JP 2013-073240 A | 22/04/2013 |
| | | JP 2015-018265 A | 29/01/2015 |
| | | KR 10-2014-0047633 A | 22/04/2014 |
| | | US 2013-0080177 A1 | 28/03/2013 |
| | | US 8762156 B2 | 24/06/2014 |
| KR 10-2014-0094744 A | 31/07/2014 | US 2014-0207453 A1 | 24/07/2014 |
| US 6604078 B1 | 05/08/2003 | JP 2001-060097 A | 06/03/2001 |
| | | JP 3417355 B2 | 16/06/2003 |
| JP 10-011248A | 16/01/1998 | NONE | |

Form PCT/ISA/210 (patent family annex) (January 2015)